# EUROPEAN PATENT APPLICATION

(11) **EP 4 339 618 A1**
(43) Date of publication of application: **20.03.2024**
(21) Application number: 21941742.5
(22) Date of filing: 24.12.2021
(51) Int. Cl.: G01N 35/00

(54) **MAGNETIC ATTRACTION INCUBATION MECHANISM OF AUTOMATIC MOLECULAR DIAGNOSTIC INSTRUMENT**

(30) Priority: 13.05.2021 CN 202110522360; 13.05.2021 CN 202110523627
(71) Applicant: Autobio Labtec Instruments Co., Ltd., Zhengzhou, Henan 450016 (CN)
(72) Inventor: WANG, Chao, Zhengzhou, Henan 450016 (CN); ZHAO, Peng, Zhengzhou, Henan 450016 (CN); SUN, Long, Zhengzhou, Henan 450016 (CN); LI, Zhenkun, Zhengzhou, Henan 450016 (CN); GAO, Weiye, Zhengzhou, Henan 450016 (CN); LIU, Cong, Zhengzhou, Henan 450016 (CN)
(74) Representative: Kolster Oy Ab
(86) International application number: PCT/CN2021/141189
(87) International publication number: WO 2022/237180

(57) **Abstract**

A magnetic attraction incubation mechanism of an automatic molecular diagnostic instrument, comprising: a magnetic attraction assembly (2) used for magnetic attraction of a reaction chamber (6) containing a sample liquid and an incubation assembly (4) used for heating the reaction chamber (6), and further comprising: a driving device (5) for driving the incubation assembly (4) and the magnetic attraction assembly (2) to be alternately close to the reaction chamber (6), the magnetic attraction assembly (2) and the incubation assembly (4) being both connected to the driving device (5). Switching of an incubation operation and a magnetic attraction operation can be achieved, and an incubation part and a magnetic attraction part effectively work in conjunction with each other by means of a linkage mechanism, so that the overall structure is effectively simplified, the space is saved, and a detection speed of the sample liquid can further be increased.

## Description

The present application claims priority to Chinese Patent Application No. 202110522360.8, titled "MAGNETIC ATTRACTION INCUBATION MECHANISM OF AUTOMATIC MOLECULAR DIAGNOSTIC INSTRUMENT", filed on May 13, 2021, and Chinese Patent Application No. 202110523627.5, titled "MAGNETIC BEAD ATTRACTION SYSTEM AND MAGNETIC BEAD ATTRACTION MECHANISM", filed on May 13, 2021, with the China National Intellectual Property Administration, which are incorporated herein by reference in their entireties.

### FIELD

The present application relates to the technical field of medical in vitro diagnosis, and in particular to a magnetic attraction incubation mechanism of an automatic molecular diagnostic instrument.

### BACKGROUND

In the conventional technology, medical in vitro diagnostic equipment is mainly used for detecting samples such as blood and urine of a human and for extracting DNA/RNA from the sample. In the extraction process of DNA/RNA of the sample, the sample requirements to undergo complex processes such as incubation in different temperatures and magnetic attraction in different stages to obtain pure DNA/RNA of the sample. There are disadvantages such as high difficulty in manual operation, low detection efficiency, and tedious operation process.

At present, an integrated structure of incubation and magnetic attraction operations is generally composed of a push-pull assembly, a constant-temperature magnetic attraction assembly, an incubation assembly, a reagent strip assembly, and a position-limiting seat. According to this structure, the constant-temperature magnetic attraction assembly is horizontally pushed and pulled, so that the constant-temperature magnetic attraction assembly approaches or moves away from the reagent strip assembly, thereby controlling the magnetic attraction process. Moreover, the incubation assembly is relatively fixed to the reagent strip assembly and cannot be moved and separated, resulting in a slow temperature rise and fall of the reagent strip, which affects the detection speed of the entire machine. In addition, the overall structure is relatively complex, the occupied space is large, and the operation is tedious.

In summary, how to improve the operational efficiency of an incubation and magnetic attraction integrated device and reduce the volume of the overall structure of the device are urgent problems to be solved by those skilled in the art.

### SUMMARY

In view of this, the object of the present application is to provide a magnetic attraction incubation mechanism of an automatic molecular diagnostic instrument, which can effectively improve the operational efficiency of the incubation and magnetic attraction integrated device, reduce the volume of the overall structure of the device, and simplify operation steps of the device.

In order to achieve the above objective, the present application provides the following technical solutions:

A magnetic attraction incubation mechanism of an automatic molecular diagnostic instrument includes a magnetic attraction assembly for magnetically attracting a reaction chamber containing a sample solution and an incubation assembly for heating the reaction chamber, a driving device for driving the incubation assembly and the magnetic attraction assembly to alternately approach the reaction chamber, and the magnetic attraction assembly and the incubation assembly are connected to the driving device.

In an embodiment, the mechanism further includes a support assembly, and the driving device and the magnetic attraction assembly are connected to the support assembly, and the support assembly is provided with a rail for limiting a lateral movement trajectory of the magnetic attraction assembly; and
the magnetic attraction assembly is configured to move away from the reaction chamber along the rail when the driving device drives the incubation assembly to rise, and the magnetic attraction assembly is configured to approach the reaction chamber along the rail when the driving device drives the incubation assembly to descend.

In an embodiment, the incubation assembly includes a heating block having a reagent groove therein, a heating device for heating the heating block, a heat dissipation device for dissipating heat from the heating block, and a temperature sensor for detecting a temperature of the heating block; and
the heating device contacts an inner wall of the reagent groove, the heat dissipation device is arranged at a bottom of the heating block, the temperature sensor is connected to the heating block, and the reagent groove is configured to accommodate the reaction chamber.

In an embodiment, the heating block has at least eight reagent grooves.

In an embodiment, the heating device is a PI electric heating film, and heating power of the PI electric heating film is distributed non-uniformly on the inner wall.

In an embodiment, the magnetic attraction assembly includes a magnet and a rotating device for driving the magnet to rotate circumferentially, the magnet has a first magnetic attraction surface and a second magnetic attraction surface circumferentially, the first magnetic attraction surface and the second magnetic attraction surface have different areas and are configured to attract magnetic beads in a sample liquid, and the rotating device is connected to the magnet.

In an embodiment, the magnetic attraction assembly includes multiple magnets arranged in parallel with each other.

In an embodiment, the magnetic attraction assembly further includes a magnetic isolation plate for magnetism isolation of the magnetic beads during a non-magnetic-attraction process, and the rotating device is connected to the magnetic isolation plate to drive the magnetic isolation plate to rotate circumferentially.

In an embodiment, the magnetic isolation plate is made of high carbon steel.

In an embodiment, each of the multiple magnets is vertically arranged on a support, the magnetic isolation plates are arranged in parallel at a top of the support, both sides of the support and the magnet are penetrated by a rotating shaft, and the rotating shaft is connected to the rotating device.

In an embodiment, the rotating device includes a rotating motor, a driving wheel mounted on an outer peripheral portion of an output shaft of the rotating motor, a driven wheel, and a rotating synchronous belt, the driven wheel is mounted on an outer peripheral portion of the rotating shaft of the magnet, and the rotating synchronous belt is mounted on an outer peripheral portion of the driving wheel and an outer peripheral portion of the driven wheel.

In an embodiment, the rotating device includes a rotating motor that is rotatable circumferentially, and the rotating motor is connected to the rotating shaft of the magnet.

In an embodiment, the driving device is a lead screw driving mechanism.

In an embodiment, the support assembly includes a horizontal plate and a vertical plate, the horizontal plate is perpendicular to the vertical plate, the rail is arranged on the horizontal plate, the magnetic attraction assembly is connected to a slider on the rail, a synchronous pulley is provided on a top of the vertical plate, a synchronous belt is wound around an outer peripheral portion of the synchronous belt pulley, one end of the synchronous belt is vertically connected to the magnetic attraction assembly, the other end of the synchronous belt is arranged along the vertical plate, a blocking piece is provided on the synchronous belt, and a telescopic end of the driving device is provided with a power piece for abutting against the blocking piece.

In an embodiment, a return spring is provided along a direction of the horizontal plate to drive the magnetic attraction assembly to reset, one end of the return spring is connected to the vertical plate, and the other end of the return spring is connected to the magnetic attraction assembly.

In an embodiment, the magnetic attraction assembly is connected to a transverse moving device, and the transverse moving device is configured to drive the magnetic attraction assembly to move away from the reaction chamber.

When the magnetic attraction incubation mechanism of an automatic molecular diagnostic instrument provided according to the present application is used, firstly, the incubation assembly can be driven by the driving device to approach the reaction chamber containing the sample liquid, so that the incubation assembly can effectively heat the reaction chamber for the incubation operation of a mixed liquid. At the same time, the magnetic assembly moves away from the reaction chamber to prevent the magnetic assembly from affecting the incubation operation. After the heating incubation operation of the mixed liquid is completed, the incubation assembly can be driven to be separated from the reaction chamber through the driving device, while the magnetic attraction assembly can alternately approach the reaction chamber. When the magnetic attraction assembly approaches an contacting surface of the reaction chamber, the magnetic attraction assembly can perform magnetic attraction operation on the mixed liquid, so that the magnetic beads in the mixed liquid in the reaction chamber can be attracted onto the inner wall of the reaction chamber. After the magnetic attraction operation is completed, the driving device can be used again to drive the magnetic attraction assembly to move away from the reaction chamber to end the magnetic attraction operation.

Through the above operations, the incubation operation and the magnetic attraction operation can be switched, and the incubation operation and the magnetic attraction operation are controlled by the driving device, so as to alternately approach the reaction chamber for corresponding operations, which can effectively simplify the overall structure and save space. In addition, the incubation assembly can be in contact with and separated from the reaction chamber, which prevents the phenomenon of slow temperature rise and decrease speeds of the mixed liquid in the reaction chamber caused by the continuous heating of the reaction chamber by the incubation assembly. After the incubation assembly is separated from the reaction chamber, the temperature rise and decrease speeds of the mixed liquid are increased, thereby improving the operating efficiency of the device and the detection speed of the sample solution.

In summary, the magnetic attraction incubation mechanism of an automatic molecular diagnostic instrument provided according to the present application can effectively improve the operational efficiency of the incubation and magnetic attraction integrated device, reduce the volume of the overall structure of the device, and simplify the operation steps of the device.

### BRIEF DESCRIPTION OF THE DRAWINGS

In order to more clearly illustrate the technical solutions in the embodiments of the present application or in the conventional technology, the following will briefly introduce drawings required in the description of the embodiments or the conventional technology. Apparently, the drawings in the following description are only the embodiments of the present application. For those skilled in the art, other drawings can also be obtained based on the provided drawings without creative efforts.
Figure 1 is a schematic structural diagram of a magnetic attraction incubation mechanism of an automatic molecular diagnostic instrument according to the present application;
Figure 2 is a schematic structural diagram of Figure 1 from another perspective;
Figure 3 is a schematic structural diagram of Figure 1 from another perspective;
Figure 4 is a schematic structural diagram of Figure 1 from another perspective;
Figure 5 is a schematic structural diagram of a magnetic attraction assembly and a reagent card strip;
Figure 6 is a schematic structural diagram of a magnet;
Figure 7 is a schematic structural diagram of a reagent card strip;
Figure 8 is a front view of Figure 7;
Figure 9 is a side view of Figure 7;
Figure 10 is a top view of Figure 7;
Figure 11 is a schematic structural diagram of an incubation assembly;
Figure 12 is a cross-sectional view of Figure 11;
Figure 13 is a schematic structural diagram of a magnet and a support.

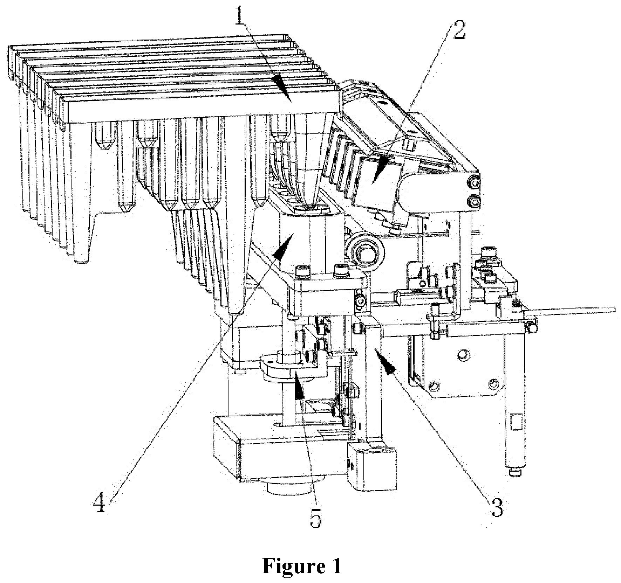

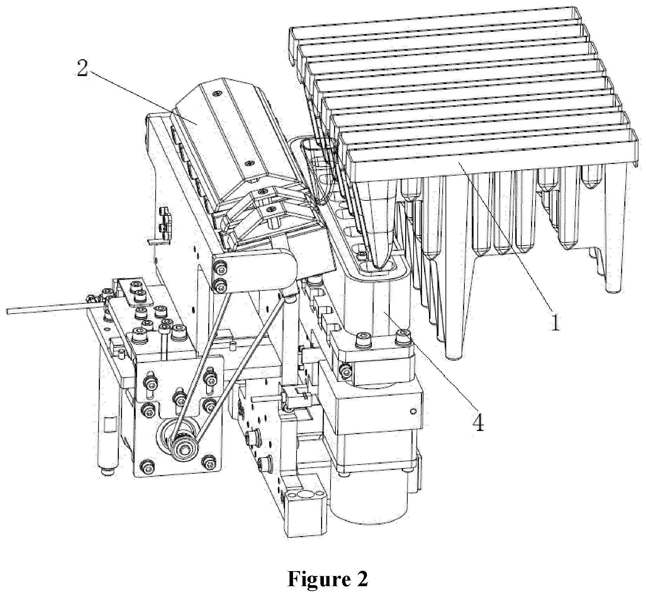

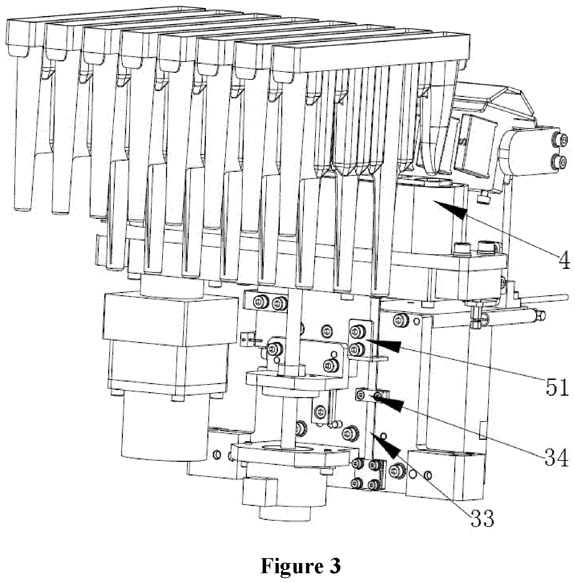

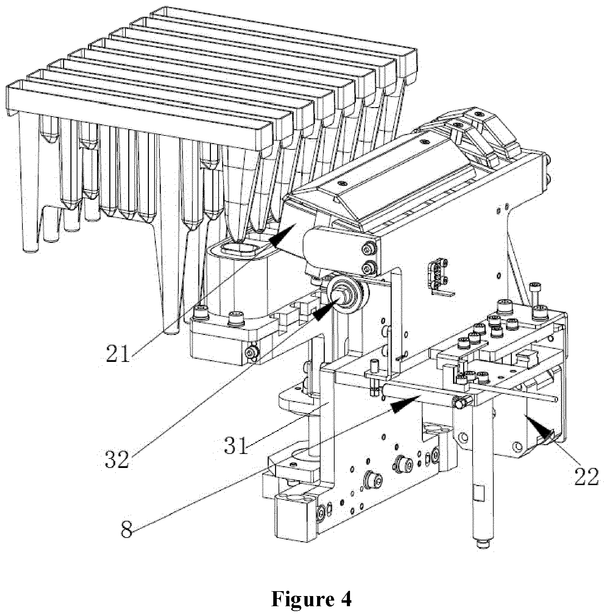

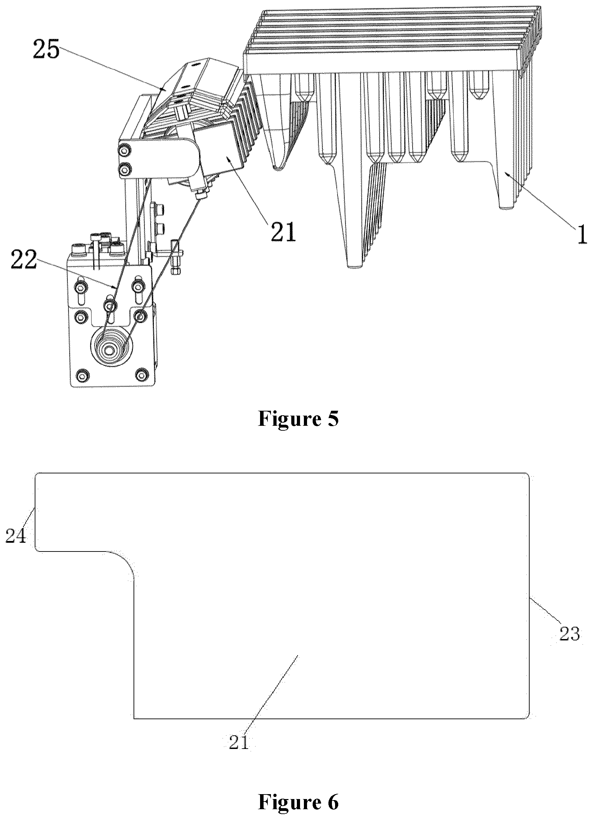

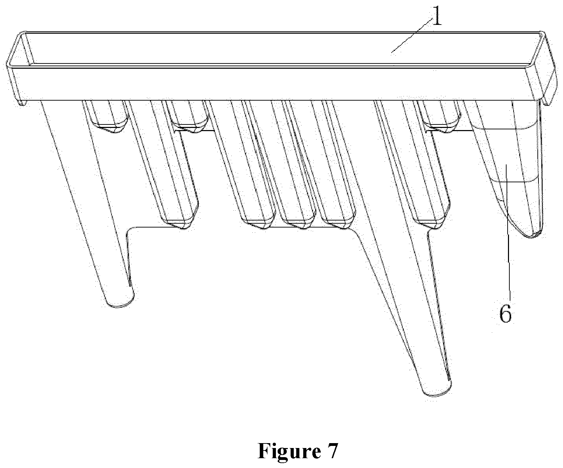

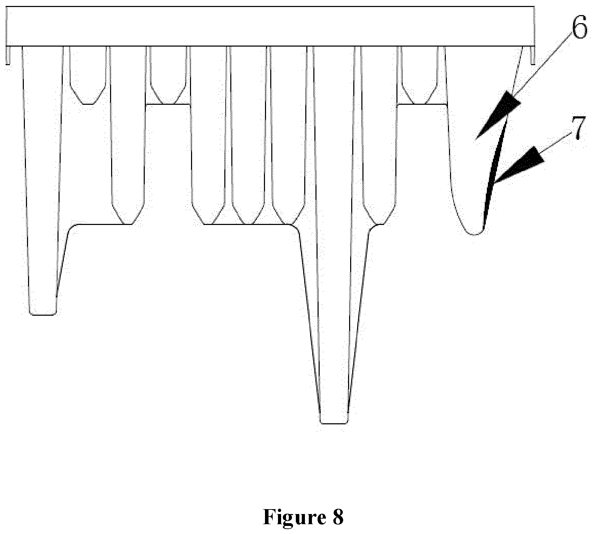

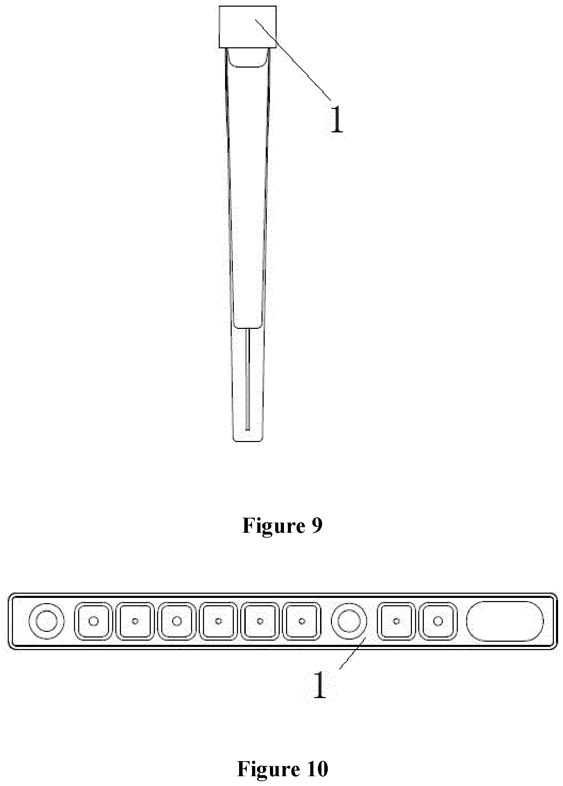

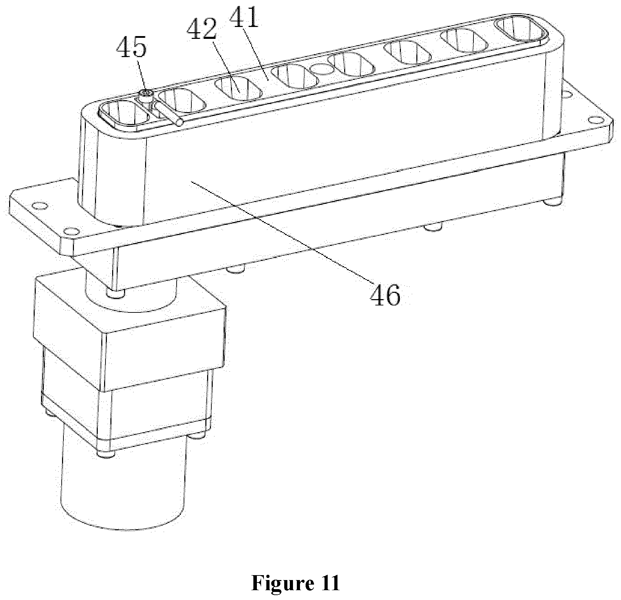

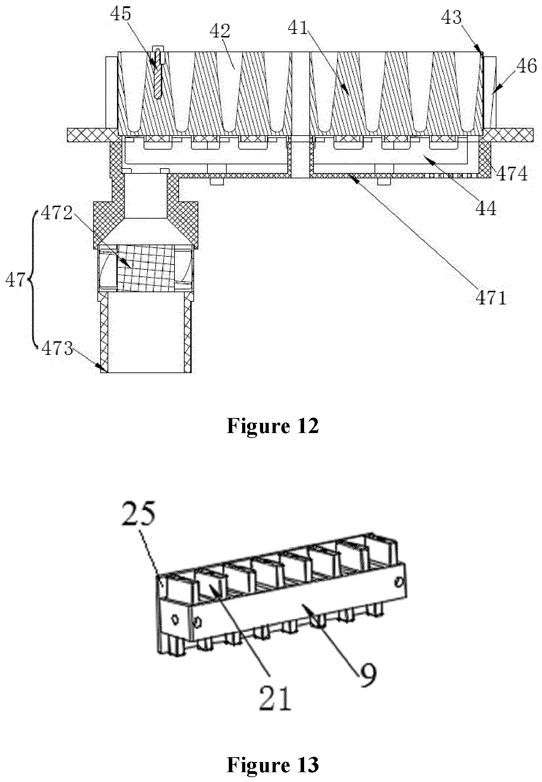

The reference signs in Figures 1 to 13 are as follows:
1 is a reagent card strip, 2 is a magnetic attraction assembly, 21 is a magnet, 22 is a rotating device, 23 is a first magnetic attraction surface, 24 is a second magnetic attraction surface, 25 is a magnetic isolation plate, 3 is a support assembly, 31 is a vertical plate, 32 is a synchronous pulley, 33 is a synchronous belt, 34 is a blocking piece, 4 is an incubation assembly, 41 is a heating block, 42 is a reagent groove, 43 is a heating device, 44 is a heat dissipation device, 45 is a temperature sensor, 46 is a thermal insulation device, 47 is a cooling device, 471 is an air duct 472 is a fan, 473 is an air exhaust outlet, 474 is an air inlet, 5 is a driving device, 51 is a power piece, 6 is a reaction chamber, 7 is a contacting surface, 8 is a return spring, and 9 is a support.

### DETAILED DESCRIPTION OF EMBODIMENTS

The technical solutions in the embodiments of the present application are clearly and completely described below in conjunction with the drawings. Apparently, the described embodiments are only part of the embodiments of the present application, not all of the embodiments of the present application. Any other embodiment obtained by those skilled in the art based on the embodiments in the present application without creative efforts shall fall within the protection scope of the present application.

The core of the present application is to provide a magnetic attraction incubation mechanism of an automatic molecular diagnostic instrument, which can effectively improve the operational efficiency of an incubation and magnetic attraction integrated device, effectively reduce the volume of the overall structure of the device, and simplify the operation steps of the device.

Reference is made to Figures 1 to 13.

A magnetic attraction incubation mechanism of an automatic molecular diagnostic instrument is provided according to an embodiment, which includes a magnetic attraction assembly 2 for magnetically attracting a reaction chamber 6 containing a sample solution, an incubation assembly 4 for heating the reaction chamber 6, and a driving device 5 for driving the incubation assembly 4 and the magnetic attraction assembly 2 to alternately approach the reaction chamber 6. Both the magnetic attraction assembly 2 and the incubation assembly 4 are connected to the driving device 5.

In the actual application process, shapes, structures, sizes, positions, etc. of the magnetic attraction assembly 2, the incubation assembly 4, and the driving device 5 can be determined based on actual situations and requirements.

When the magnetic attraction incubation mechanism of an automatic molecular diagnostic instrument according to the present application is used, firstly, the incubation assembly 4 can be driven by the driving device 5 to approach the reaction chamber 6 containing the sample liquid, so that the incubation assembly 4 can effectively heat the reaction chamber 6 to facilitate the incubation operation of a mixed liquid. At the same time, the magnetic attraction assembly 2 moves away from the reaction chamber 6 to prevent the magnetic attraction assembly 2 from affecting the incubation operation. After the heating incubation operation of the mixed liquid is completed, the incubation assembly 4 and the reaction chamber 6 can be separated by the driving device 5, At the same time, the magnetic attraction assembly 2 can alternately approach the reaction chamber 6. When the magnetic attraction assembly 2 approaches a contacting surface 7 of the reaction chamber 6, the magnetic attraction assembly 2 can perform the magnetic attraction operation on the mixed liquid, so that magnetic beads in the mixed liquid of the reaction chamber 6 can be attracted onto an inner wall of the reaction chamber 6. After the magnetic attraction operation is completed, the driving device 5 can be used again to drive the incubation assembly 4 to move away from the reaction chamber 6 so as to end the magnetic attraction operation.

Through the above operations, the incubation operation and the magnetic attraction operation can be switched, and both the incubation operation and the magnetic attraction operation are controlled by the driving device 5 to alternately approach the reaction chamber 6 for corresponding operations, which can effectively simplify the overall structure and save space. In addition, the incubation assembly 4 can be in contact with or separated from the reaction chamber 6, which prevents the phenomenon of slow temperature rise and fall of the mixed liquid in the reaction chamber 6 caused by the continuous heating of the reaction chamber 6 by the incubation assembly 4. After the incubation assembly 4 is separated from the reaction chamber 6, the temperature rise and fall of the mixed liquid are increased, thereby improving the operating efficiency of the device and the detection speed of the sample solution.

In summary, the magnetic attraction incubation mechanism of an automatic molecular diagnostic instrument according to the present application can effectively improve the operational efficiency of the incubation and magnetic attraction integrated device, effectively reduce the volume of the overall structure of the device, and simplify the operation steps of the device.

On the basis of the above embodiment, in an embodiment, the mechanism further includes a support assembly 3. Both the driving device 5 and the magnetic attraction assembly 2 are connected to the support assembly 3, and the support assembly 3 is provided with a rail for limiting a lateral movement trajectory of the magnetic attraction assembly 2. When the driving device 5 drives the incubation assembly 4 to rise, the magnetic attraction assembly 2 moves away from the reaction chamber 6 along the rail. When the driving device 5 drives the incubation assembly 4 to descend, the magnetic attraction assembly 2 approaches the reaction chamber 6 along the rail.

In an embodiment, the incubation assembly 4 includes: a heating block 41 having a reagent groove 42 therein, a heating device 43 for heating the heating block 41, a heat dissipation device 44 for heat dissipation of the heating block 41, and a temperature sensor 45 for detecting the temperature of the heating block 41. The heating device 43 contacts an inner wall of the reagent groove 42, and the heat dissipation device 44 is arranged at a bottom of the heating block 41. The temperature sensor 45 is connected to the heating block 41, and the reagent groove 42 is configured to accommodate the reaction chamber 6.

It should be noted that, in order to realize rapid switching of the incubation temperature of the incubation assembly 4, an thermal insulation device 46 may be provided on an outer peripheral portion of the heating block 41, and a cooling device 47 may be provided below the heat dissipation device 44 for improving the heat dissipation efficiency of the heat dissipation device 44, so that the incubation temperature of the incubation assembly 4 can be quickly switched within a range of 37 degrees Celsius to 80 degrees Celsius.

When the incubation assembly 4 is required to heat the reaction chamber 6, firstly, the heating device 43 can be used to heat the heating block 41. When the temperature sensor 45 detects that the temperature of the heating block 41 reaches a first preset temperature, the heating operation of the heating device 43 is stopped. The thermal insulation device 46 can effectively ensure that the temperature of the heating block 41 is constant, so that the incubation process of the sample solution can start. At this time, the reaction chamber 6 containing the sample solution may be placed in the reagent groove 42 of the heating block 41. After the incubation process of the sample solution is completed and the sample solution undergoes the magnetic attraction process, the heating device 43 is used again to rapidly heat the heating block 41. As the heating device 43 of the device contacts the inner wall of the reagent groove, the rising speed of the incubation temperature of the reagent groove can be effectively improved, thereby allowing the sample solution to quickly reach a required incubation temperature.

When temperature sensor 45 detects that the temperature of the heating block 41 reaches a second preset temperature, the heating operation of the heating device 43 is stopped, and the thermal insulation device 46 can effectively ensure that the temperature of the heating block 41 is constant, so that the incubation process of the sample solution can be started again. After the cultivation process of the sample solution is completed, it is necessary to perform a cooling operation on the heating block 41. The radiator provided in the device can effectively cool the heating block 41, and the cooling device 47 can further improve the heat dissipation efficiency of the radiator, thereby accelerating the cooling process of the heating block 41 and improving the heat dissipation efficiency of the heating block 41. Therefore, the temperature rise and fall of the incubation assembly 4 of the device are relatively efficient, which improves the detection efficiency of the sample solution.

The cooling device 47 may include an air duct 471 for sealing and enclosing the heat dissipation device 44 and a fan 472 for accelerating air flow of the heat dissipation device 44. The air duct 471 is arranged around a periphery of the heat dissipation device 44, and the fan 472 is arranged in the air duct 471. Two ends of the air duct 471 are respectively provided with an air exhaust outlet 473 and an air inlet 474.

Through the above arrangement, a heat dissipation channel can be a closed channel. High-temperature gas is sealed and discharged centrally to improve the ventilation effect and cooling efficiency, so that the cooling time of the heating block 41 is relatively short. Additionally, air is sucked through the fan 472 to circulate, which is also beneficial to discharging heat transferred from the heating block 41 to heat dissipation fins relatively fast.

In an embodiment, the heating block 41 has at least 8 reagent grooves 42. The shape and number of the reagent grooves 42 can be determined based on the actual situation of the reaction chamber 6. There are eight or more reagent grooves 42, the incubation operation can be performed simultaneously on eight or more reaction chambers 6, and temperatures of multiple reaction chambers 6 can be ensured to be consistent when multiple reaction chambers 6 are incubated simultaneously. Since DNA/RNA in the sample solution is very sensitive to temperature, ensuring that temperature conditions of the reaction chambers 6 are the same can improve the accuracy of detection results of the sample solution, and reduce experimental errors.

In an embodiment, the heating block 41 is made of aluminum alloy. For example, the heating block 41 may be made of A6063 material, as the A6063 material has good thermal conductivity and can ensure rapid heat transfer. Moreover, the A6063 material also has excellent processing performance, excellent weldability, excellent extrusion property, excellent electroplating property, good corrosion resistance and so on, and is suitable for processing to manufacture the heating block 41.

In an actual application process, the shape, structure, size, material, etc. of the heating block 41 may be determined based on actual situations and actual requirements during practical application.

In an embodiment, the heating device 43 is a PI electric heating film, and the heating power of the PI electric heating film is distributed non-uniformly on the inner wall.

It should be noted that the PI electric heating film, also known as a polyimide film, is a structural member formed by using a polyimide film as an outer insulator and metal wire as an inner conductive heat generator, and then thermal bonding the above materials at high temperature and high pressure. The PI electric heating film has excellent insulation, electrical resistance, thermal conductivity efficiency, and resistance stability, and is widely used in the heating field and can achieve high temperature control accuracy.

In addition, it should be noted that using the PI electric heating film to heat the reaction chamber 6 and the heating block 41 can effectively improve the heating speed and ensure that the heating device 43 completely contacts the inner wall of the reagent groove. During actual application, the arrangement manner and structure of the heating device 43 may be determined based on the actual situation and actual requirements.

It should also be noted that in addition to using PI electric heating film to heat the heating block 41, the heating block 41 may also be heated by using a silicone heating sheet, because the silicone heating sheet is a soft electric heating film element formed by a silicone rubber with high temperature resistance, high thermal conductivity, good insulation performance, and good strength, a fiber reinforced material with high temperature resistance, and a metal heating film circuit. The silicone heating sheet is a thin sheet product with good flexibility and can be in close contact with an object to be heated.

During practical application, the structure, size, material, etc. of the heating device 43 may be determined based on the actual situation and actual requirements.

In addition, the heating power of the PI electric heating film is distributed non-uniformly on the inner wall. Because the shape of the reaction chamber 6 may be a special-shaped structure, the reagent groove 42 is required to be configured as a special-shaped cavity structure that matches the reaction chamber 6. Due to the special-shaped cavity structure in the heating block 41, temperature conduction and internal temperature of the heating block 41 cannot be uniform. Therefore, non-uniformity setting is required to be performed on the surface heating power of the PI electric heating film based on the internal structure of the heating block 41 to ensure temperature uniformity at various positions inside the heating block 41.

For example, when it is detected that the temperature of a certain local position of the heating block 41 is relatively low, the heating power of the PI electric heating film that contacts the certain local position can be appropriately increased to ensure that the temperature at this position is the same as temperatures at other locations. That is to say, the inner walls of the reagent grooves 42 of the entire heating block 41 contact the PI electric heating film. The heating power at different positions of the PI electric heating film is required to be adjusted and can be determined according to the actual requirements of the heating block 41, so as to ensure the heating inside of the heating block 41 to be uniform and the temperatures at various positions of the reagent groove 42 to be the same.

On the basis of the above embodiments, in an embodiment, the magnetic attraction assembly 2 includes a magnet 21 and a rotating device 22 for driving the magnet 21 to rotate circumferentially. The magnet 21 has a first magnetic attraction surface 23 and a second magnetic attraction surface 24 circumferentially. The first magnetic attraction surface 23 and the second magnetic attraction surface 24 have different areas and are configured to attract magnetic beads in the sample liquid, and the rotating device 22 is connected to the magnet 21.

It should be noted that in the case that the number of reaction chambers 6 is eight or more, the same number of magnets 21 is required to be provided to ensure that the magnets 21 and the reaction chambers 6 are arranged in one-to-one correspondence, which ensures that the subsequent magnetic attraction operation proceeds smoothly. In this way, the magnetic attraction operation can be performed on eight or more reaction chambers 6 simultaneously, which improves the operational efficiency of the device.

When the magnetic attraction assembly 2 is used to perform magnetic attraction operation on the sample liquid, the magnetic attraction surface 23 and the second magnetic attraction surface 24 of the magnet 21 have the different areas, that is, magnetic forces exerted on the magnetic beads by the first magnetic attraction surface 23 and the magnetic force of the second magnetic attraction surface 24 are also different, and the magnetic force increases as the area of the magnetic attraction surface increases. When a relatively large magnetic force is needed to attract the magnetic beads in the reaction chamber 6, the magnet 21 can be rotated by the rotating device 22, so that the attraction surface with a relatively large magnetic attraction surface is aligned with the reaction chamber 6, and then the magnet 21 is driven to approach the reaction chamber 6 to allow the magnetic attraction surface with a relatively large area to contact the contacting surface 7 of the reaction chamber 6, so as to facilitate the magnetic attraction operation on the sample solution in the reaction chamber 6 under a required magnetic force.

When it is necessary to change the magnetic force to perform the magnetic attraction operation on the sample solution again, the magnet 21 can be driven to move away from the reaction chamber 6 of a reagent card strip 1, and then the rotating device 22 is used to drive the magnet 21 to rotate, so that the magnetic attraction surface with a relatively small area is aligned with the reaction chamber 6. Then, the magnet 21 is driven to approach the reaction chamber 6 to allow the magnetic attraction surface with the relatively small area to contact the contacting surface 7 of the reaction chamber 6, so that the magnetic attraction operation can be performed on the sample solution in the reaction chamber 6 again. Therefore, the magnetic attraction assembly 2 of the device can realize the switching of the magnetic attraction surfaces and the conversion operation of the magnetic forces, that is, the switching of magnetic attraction operations of the magnets 21 with different magnetic forces can be realized.

In an embodiment, the magnetic attraction assembly 2 includes multiple magnets 21 arranged in parallel with each other, and each magnet 21 may be arranged in one-to-one correspondence with each reaction chamber 6.

In an embodiment, the magnetic attraction assembly 2 also includes a magnetic isolation plate 25 for magnetism isolation of the magnetic beads during a non-magnetic-attraction process, and a rotating device 22 is connected to the magnetic isolation plate 25 to drive the magnetic isolation plate 25 to rotate circumferentially. The arrangement of the magnetic isolation plate 25 can effectively solve the problem of the interference of the magnet 21 on a magnetic bead suspension in the reaction chamber 6 in a non-magnetic-attraction state.

In an embodiment, the magnetic isolation plate 25 is made of high carbon steel. The high carbon steel member can effectively absorb an external magnetic field emitted by the magnet 21, so as to realize the magnetic isolation effect. Moreover, the magnetic isolation plate 25 may be configured as a planar structure or an arched structure. That is, in the actual application process, the shape, size, material, etc. of the magnetic isolation plate 25 may be determined based on the actual situation and actual requirements.

In an embodiment, each magnet 21 is vertically arranged on a support 9, and the magnetic isolation plate 25 is arranged in parallel at a top of the support 9. Both sides of the support 9 and the magnet 21 are penetrated by a rotating shaft, and the rotating shaft is connected to the rotating device 22.

For example, the support 9 may be of a U-shaped groove structure, and the magnets 21 are all vertically arranged in the U-shaped groove, and the magnets 21 are arranged at equal intervals. The spacing between the magnets 21 and the spacing between the reagent card strips 1 is the same, so as to ensure one-to-one correspondence between the magnets 21 and the reaction chamber 6. Then, the magnetic isolation plate 25 is arranged at a top of the U-shaped groove, and the magnetic isolation plate 25 can effectively block one side of each magnet 21. The first magnetic attraction surface 23 and the second magnetic attraction surface 24 of each magnet 21 are perpendicular to the magnetic isolation plate 25, and finally, the rotating shaft penetrates through the both sides of the U-shaped groove and each magnet 21. Therefore, when the rotating shaft rotates with the rotating device 22, the first magnetic attraction surface 23 may be allowed to face and be aligned with the attaching surface 7 of the reaction chamber 6, the second magnetic attraction surface 24 may be allowed to face and be aligned with the contacting surface 7 of the reaction chamber 6, and the magnetic isolation plate 25 may be allowed to face and be aligned with the contacting surface 7 of the reaction chamber 6.

In an embodiment, the rotating device 22 includes a rotating motor, a driving wheel mounted on an outer peripheral portion of an output shaft of the rotating motor, a driven wheel, and a rotating synchronous belt. The driven wheel is mounted on an outer peripheral portion of the rotating shaft of the magnet 21, and the rotating synchronous belt is mounted on an outer peripheral portion of the driving wheel and an outer peripheral portion of the driven wheel.

It should be noted that when the rotating motor is started to operate, the output shaft can be driven to rotate, the driving wheel can be driven to rotate during the rotation of the output shaft, and then the rotating synchronous belt and the driven wheel are drive to rotate. The rotating shaft can be driven to rotate during the rotation of the driven wheel. The rotating shaft of each magnet 21 here is the same structure as the rotating shaft configured to penetrate through the both sides of the support 9 and each magnet 21. When the rotating shaft rotates, each magnet 21 is allowed to rotate circumferentially, thereby switching between the first magnetic attraction surface 23, the second magnetic attraction surface 24, and the magnetic isolation plate 25, thereby realizing magnetic switching and magnetic isolation operation.

In the actual application process, the shapes, structures, sizes, materials, positions, etc. of the rotating motor, the driving wheel, the driven wheel, the rotating synchronous belt, and the rotating shaft may be determined based on the actual situation and actual requirements.

In an embodiment, the rotating device 22 includes a rotating motor that is rotatable circumferentially, and the rotating motor is connected to the rotating shaft of the magnet 21. That is, the rotating motor may be directly connected to the rotating shaft, so that the rotating shaft directly drives the rotating shaft to rotate. The rotating shaft here is the same structure as the rotating shaft for penetrating through the both sides of the support 9 and each magnet 21. When the rotating shaft rotates, the magnet 21 is allowed to rotate circumferentially, so that the switching operation can be performed between the first magnetic attraction surface 23, the second magnetic attraction surface 24, and the magnetic isolation plate 25, thereby realizing magnetic switching and magnetic isolation operation.

In an embodiment, the drive device 5 is a lead screw drive mechanism. The lead screw drive mechanism may be arranged vertically, or may be arranged horizontally according to the overall structure, so as to ensure the drive device 5 to drive the incubation assembly 4 to move up and down.

On the basis of the above embodiments, in an embodiment, the support assembly 3 includes a horizontal plate and a vertical plate 31. The horizontal plate is perpendicular to the vertical plate 31, and a rail is provided on the horizontal plate. The magnetic attraction assembly 2 is connected to a slider on the rail. A synchronous pulley 32 is provided on a top of the vertical plate 31, and a synchronous belt 33 is wound around an outer peripheral portion of the synchronous pulley 32. One end of the synchronous belt 33 is vertically connected to the magnetic attraction assembly 2, and the other end of the synchronous belt 33 is arranged along the vertical plate 31. A blocking piece is provided on the synchronous belt 33. A telescopic end of the driving device 5 is provided with a power piece 51 for abutting against the blocking piece.

It should be noted that when the telescopic end of the driving device 5 drives the incubation assembly 4 to descend, the power piece 51 engages with the blocking piece. When the power piece 51 moves downwards, the blocking piece can be driven to move downwards, and then the synchronous belt 33 arranged along the vertical plate 31 is pulled to move downwards, thereby tightening the synchronous belt 33 vertically connected to the magnetic attraction assembly 2, so that the magnetic attraction assembly 2 approaches the vertical plate 31 along the rail, and the magnetic attraction assembly 2 approaches the reaction chamber 6. Therefore, the up and down movement of the incubation assembly 4 and movement of the magnetic attraction assembly 2 approaching and fitting the reaction chamber 6 are controlled by the same motor in a linkage manner, which is conducive to simplifying the overall structure of the device.

In an embodiment, a return spring 8 is provided along a direction of the horizontal plate to drive the magnetic attraction assembly 2 to reset. One end of the return spring 8 is connected to the vertical plate 31, and the other end of the return spring 8 is connected to the magnetic attraction assembly 2. When the magnetic attraction assembly 2 approaches and fits the reaction chamber 6, the return spring 8 is compressed. When the telescopic end of the driving device 5 drives the incubation assembly 4 to rise, the power piece 51 moves upwards and the power piece 51 is separated from the blocking piece. At this time, the return spring 8 in a compressed state can push the magnetic attraction assembly 2 to move away from the reaction chamber 6, so that the magnetic attraction assembly 2 is reset.

In an embodiment, the magnetic attraction assembly 2 is connected to a transverse moving device. The transverse moving device is configured to drive the magnetic attraction assembly 2 to move away from the reaction chamber 6. That is to say, the arrangement of the return spring 8 can be cancelled, and the magnetic attraction assembly 2 can be reset by utilizing the lateral driving of the transverse assembly.

In order to further illustrate the use process of the magnetic attraction incubation mechanism of an automatic molecular diagnostic instrument according to the present application, an example is provided below.

Eight or more reagent card strips 1 may be arranged in parallel and evenly above the incubation assembly 4. A rightmost part of the reagent card strip 1 is the reaction chamber 6. All incubation operations and magnetic attraction operations are performed around the reaction chamber 6. The return spring 8 can be used to reset the magnetic attraction assembly 2.

The incubation assembly 4 can reciprocate up and down through the driving device 5, and the magnetic attraction assembly 2 can reciprocate left and right under the actions of the driving device 5 and the return spring 8. The power piece 51 can slide relatively along the synchronous belt 33, and the blocking piece is fixed to the synchronous belt 33. When the driving device 5 drives the incubation assembly 4 to move downwards, the power piece 51 moves downwards to push the blocking piece to move downwards, and the blocking piece pulls the synchronous belt 33 and overcomes the elastic force of the return spring 8 to drive the magnetic attraction assembly 2 to move leftwards integrally. When the driving device 5 drives the incubation assembly 4 to move upwards, the power piece 51 moves upwards to be separated from the blocking piece, and the magnetic attraction assembly 2 moves rightwards under the action of the return spring 8.

The specific movement process is as follows: first, a mixed liquid of the reagent and the sample is injected into the reaction chamber 6 on the right side of the reagent card 1. Then, the incubation assembly 4 moves upwards under the driving effect of the driving device 5, so that the reagent grooves 42 of the heating block 41 of the incubation assembly 4 completely wrap around the eight or more reaction chambers 6 for heating. At the same time, the magnetic attraction assembly 2 is pulled to the rightmost side under the action of the return spring 8, the eight or more magnets 21 are driven by the rotating device 22 to rotate by a certain angle to ensure that the strongest magnetic surfaces of the magnets 21 face the contacting surface 7 of the reaction chamber 6 and is arranged in parallel with the contacting surface 7 of the reaction chamber 6. The strongest magnetic surface refers to a magnetic attraction surface with a relatively large area.

After the heating and incubation operation is completed, the incubation assembly 4 moves downwards under the driving effect of the driving device 5, so that the heating block 41 is separated from the reaction chamber 6 of the reagent card strip 1. When the incubation assembly 4 moves downwards to a certain distance, the power piece 51 of the driving device 5 starts to push the blocking piece to move downwards. The blocking piece is fixed to the synchronous belt 33, and correspondingly, the synchronous belt 33 pulls the magnetic attraction assembly 2 to approach the reaction chamber 6. When the strongest magnetic surface of the magnet 21 contacts the contacting surface 7 of the reaction chamber 6, a magnetic attraction action is started. The magnet 21 can attract the magnetic beads in the mixed liquid of the reaction chamber 6 to the inner wall of the reaction chamber 6. After the magnetic attraction operation is completed, the driving device 5 drives the incubation assembly 4 to move upwards, and at this time, the magnetic attraction assembly 2 moves away from the reaction chamber 6 under the action of return spring 8.

During the magnetic attraction operation, if the magnetic force needs to be adjusted and switched, the rotating device 22 can control the magnet 21 to rotate circumferentially, so as to ensure that both the first magnetic attraction surface 23 and the second magnetic attraction surface 24 of the magnet 21 can be quickly switched to face the contacting surface 7 of the reaction chamber 6, and be arranged in parallel with the contacting surface 7. Moreover, in the non-magnetic-attraction state, the rotating device 22 can enable the magnetic isolation plate 25 to face the contacting surface 7 of the reaction chamber 6 and to be arranged in parallel with the contacting surface 7, so as to effectively solve the interference problem of the magnet 21 on the magnetic bead suspension in the reaction chamber 6 in the non-magnetic-attraction state.

According to the magnetic attraction incubation mechanism of an automatic molecular diagnostic instrument of the present application, the temperature sensing assembly 4 and the magnetic sensing assembly 2 adopts a linkage structure, thereby saving a set of driving structures. Moreover, both the incubation operation and the magnetic attraction operation are performed in the reaction chamber 6 of the reagent card strip 1, so that the operations are more convenient. Moreover, the mechanism can perform eight or more sets of sample detections simultaneously, effectively improving the sample detection efficiency. The magnetic attraction assembly 2 of the mechanism can realize fast switching of magnetic attraction operations with different cross-sectional magnetic fields and different magnetic forces. The magnetic isolation plate 25 is also provided, effectively preventing the magnetic interference phenomenon of the magnet 21 on the reaction chamber 6 in the non-magnetic-attraction state. In addition, the incubation temperature of the incubation assembly 4 of the mechanism can be quickly switched at any temperature between 37 degrees Celsius and 80 degrees Celsius, which is beneficial for improving the operational efficiency of the device and the sample detection efficiency

It should be noted that in the first magnetic attraction surface 23 and the second magnetic attraction surface 24 mentioned in the present application, the terms "first" and "second" are only used to distinguish different positions and there is no distinction in order.

In addition, it should be noted that, orientations or positional relationships indicated by terms such as "horizontal", "vertical" in the present application are based on the orientations or position relationships shown in the drawings, and are only for the convenience of simplifying description and easy understanding, rather than indicating or implying that devices or elements referred to must have specific orientations, or must be constructed and operated in specific orientations, and thus should not be understood as limitations to the present application.

The embodiments in the specification are described in a progressive manner, and each embodiment focuses on the difference from other embodiments. Same and similar parts in each embodiment may be referred to each other. Any combination of all the embodiments provided by the present application falls within the protection scope of the present application and is not repeated here.

The magnetic attraction incubation mechanism of an automatic molecular diagnostic instrument provided according to the present application has been introduced in detail above. Specific embodiments are used herein to illustrate the principles and the implementations of the present application, and the descriptions of the above embodiments are only used to help understand methods and core ideas of the present application. It should be pointed out that for those skilled in the art, some improvements and modifications may be made to the present application without departing from the principles of the present application, and these improvements and modifications shall fall within the protection scope of the claims of the present application.

## Claims

1. A magnetic attraction incubation mechanism of an automatic molecular diagnostic instrument, comprising a magnetic attraction assembly (2) for magnetically attracting a reaction chamber (6) containing a sample solution and an incubation assembly (4) for heating the reaction chamber (6), a driving device (5) for driving the incubation assembly (4) and the magnetic attraction assembly (2) to alternately approach the reaction chamber (6), wherein the magnetic attraction assembly (2) and the incubation assembly (4) are connected to the driving device (5).

2. The magnetic attraction incubation mechanism of the automatic molecular diagnostic instrument according to claim 1, further comprising a support assembly (3), wherein the driving device (5) and the magnetic attraction assembly (2) are connected to the support assembly (3), and the support assembly (3) is provided with a rail for limiting a lateral movement trajectory of the magnetic attraction assembly (2); and
the magnetic attraction assembly (2) is configured to move away from the reaction chamber (6) along the rail when the driving device (5) drives the incubation assembly (4) to rise, and approach the reaction chamber (6) along the rail when the driving device (5) drives the incubation assembly (4) to descend.

3. The magnetic attraction incubation mechanism of the automatic molecular diagnostic instrument according to claim 1, wherein the incubation assembly (4) comprises a heating block (41) having a reagent groove (42) inside, a heating device (43) for heating the heating block (41), a heat dissipation device (44) for dissipating heat from the heating block (41), and a temperature sensor (45) for detecting a temperature of the heating block (41); and
the heating device (43) contacts an inner wall of the reagent groove (42), the heat dissipation device (44) is arranged at a bottom of the heating block (41), the temperature sensor (45) is connected to the heating block (41), and the reagent groove (42) is configured to accommodate the reaction chamber (6).

4. The magnetic attraction incubation mechanism of the automatic molecular diagnostic instrument according to claim 3, wherein the heating block (41) has at least eight reagent grooves (42).

5. The magnetic attraction incubation mechanism of the automatic molecular diagnostic instrument according to claim 3, wherein the heating device (43) is a PI electric heating film, and heating power of the PI electric heating film is distributed non-uniformly on the inner wall.

6. The magnetic attraction incubation mechanism of the automatic molecular diagnostic instrument according to any one of claims 1 to 5, wherein the magnetic attraction assembly (2) comprises a magnet (21) and a rotating device (22) for driving the magnet (21) to rotate circumferentially, the magnet (21) has a first magnetic attraction surface (23) and a second magnetic attraction surface (24) circumferentially, the first magnetic attraction surface (23) and the second magnetic attraction surface (24) have different areas for attracting magnetic beads in a sample liquid, and the rotating device (22) is connected to the magnet (21).

7. The magnetic attraction incubation mechanism of the automatic molecular diagnostic instrument according to claim 6, wherein the magnetic attraction assembly (2) comprises a plurality of magnets (21) arranged in parallel with each other.

8. The magnetic attraction incubation mechanism of the automatic molecular diagnostic instrument according to claim 7, wherein the magnetic attraction assembly (2) further comprises a magnetic isolation plate (25) for magnetism isolation of the magnetic beads during a non-magnetic-attraction process, and the rotating device (22) is connected to the magnetic isolation plate (25) to drive the magnetic isolation plate (25) to rotate circumferentially.

9. The magnetic attraction incubation mechanism of the automatic molecular diagnostic instrument according to claim 8, wherein the magnetic isolation plate (25) is made of high carbon steel.

10. The magnetic attraction incubation mechanism of the automatic molecular diagnostic instrument according to claim 9, wherein each of the plurality of magnets (21) is vertically arranged on a support (9), the magnetic isolation plate (25) is arranged in parallel at a top of the support (9), both sides of the support (9) and each magnet (21) are penetrated by a rotating shaft, and the rotating shaft is connected to the rotating device (22).

11. The magnetic attraction incubation mechanism of an automatic molecular diagnostic instrument according to claim 6, wherein the rotating device (22) comprises a rotating motor, a driving wheel mounted on an outer peripheral portion of an output shaft of the rotating motor, a driven wheel, and a rotating synchronous belt, the driven wheel is mounted on an outer peripheral portion of the rotating shaft of the magnet (21), and the rotating synchronous belt is mounted on an outer peripheral portion of the driving wheel and an outer peripheral portion of the driven wheel.

12. The magnetic attraction incubation mechanism of an automatic molecular diagnostic instrument according to claim 6, wherein the rotating device (22) comprises a rotating motor that is rotatable circumferentially, and the rotating motor is connected to the rotating shaft of the magnet (21).

13. The magnetic attraction incubation mechanism of an automatic molecular diagnostic instrument according to any one of claims 1 to 5, wherein the driving device (5) is a lead screw driving mechanism.

14. The magnetic attraction incubation mechanism of an automatic molecular diagnostic instrument according to any one of claims 2 to 5, wherein the support assembly (3) comprises a horizontal plate and a vertical plate (31), the horizontal plate is perpendicular to the vertical plate (31), the rail is arranged on the horizontal plate, the magnetic attraction assembly (2) is connected to a slider on the rail, a synchronous pulley (32) is provided on a top of the vertical plate (31), a synchronous belt (33) is wound around an outer peripheral portion of the synchronous belt pulley (32), one end of the synchronous belt (33) is vertically connected to the magnetic attraction assembly (2), the other end of the synchronous belt (33) is arranged along the vertical plate (31), a blocking piece (34) is provided on the synchronous belt (33), and a telescopic end of the driving device (5) is provided with a power piece (51) for abutting against the blocking piece (34).

15. The magnetic attraction incubation mechanism of an automatic molecular diagnostic instrument according to claim 14, wherein a return spring (8) is provided along a direction of the horizontal plate to drive the magnetic attraction assembly (2) to reset, one end of the return spring (8) is connected to the vertical plate (31), and the other end of the return spring (8) is connected to the magnetic attraction assembly (2).

16. The magnetic attraction incubation mechanism of an automatic molecular diagnostic instrument according to claim 14, wherein the magnetic attraction assembly (2) is connected to a transverse moving device, the transverse moving device is configured to drive the magnetic attraction assembly (2) to move away from the reaction chamber (6).
